# EUROPÄISCHE PATENTANMELDUNG

(11) **EP 0 585 780 A1**
(43) Veröffentlichungstag der Anmeldung: **09.03.1994**
(21) Anmeldenummer: 93113490.2
(22) Anmeldetag: 24.08.1993
(51) Int. Cl.: H01M 2/38

(54) **Vorrichtung zur Einführung eines Luftstromes in Zellen eines Akkumulators**

(30) Priorität: 02.09.1992 DE 9211814 U
(71) Anmelder: Accumulatorenwerke Hoppecke Carl Zoellner & Sohn GmbH & Co. KG, D-59914 Brilon (DE)
(72) Erfinder: Kesper, Heinrich, Dipl.-Ing., D-3542 Willingen (DE)
(74) Vertreter: Stenger, Watzke & Ring Patentanwälte

(57) **Zusammenfassung**

Die Erfindung betrifft eine Vorrichtung zur Einführung eines Luftstromes in Zellen (1) eines Akkumulators mit einem an eine Pumpe anschließbaren Schlauch (8), welcher an seinem aus der Zelle (1) herausragenden Ende ein Anschlußstück (9) mit einer Düsenöffnung (12) und an seinem im Innenraum der Zelle (1) angeordneten Ende eine Austrittsöffnung (10) aufweist, um bei gleichzeitiger Verbesserung der Elektrolytdurchmischung eine einfache Verbindung der Zellen (1) eines Akkumulators untereinander und einen einfachen Anschluß des Akkumulators an eine Pumpe eines Ladegerätes zu ermöglichen, wobei Akkumulatoren in einfacher Weise für das Aufladen unter gleichzeitigem Einleiten eines Luftstromes nachrüstbar bzw. bestehende Vorrichtungen in einfacher Weise umrüstbar sind, ist das Anschlußstück (9) auf das aus der Zelle (1) herausragende Ende des Schlauches (8) aufgesteckt und weist eine Aufnahmeöffnung (14) für einen Adapter (20) auf, der den Akkumulator mit der Pumpe verbindet.

## Beschreibung

Die Erfindung betrifft eine Vorrichtung zur Einführung eines Luftstromes in Zellen eines Akkumulators mit einem an eine Pumpe anschließbaren Schlauch, welcher an seinem aus der Zelle herausragenden Ende ein Anschlußstück mit einer Düsenöffnung und an seinem im Innenraum der Zelle angeordneten Ende eine Austrittsöffnung aufweist.

Bei der Ladung eines Akkumulators wird dem Elektrolyten Wasser entzogen und konzentrierte Schwefelsäure gebildet. Die gegenüber dem Elektrolyt schwerere Säure sinkt in den unteren Bereich der Zellen ab und ruft eine sogenannte Elektrolytschichtung hervor. Diese Schichtung wird wieder aufgehoben, wenn der Akkumulator in der Nachladephase in die Gasungsspannung gefahren wird, wo durch aufsteigende Gasblasen der Elektrolyt durchmischt wird. Nachteil der Nachladephase und der Gasung ist aber, daß hierbei Energie verbraucht wird und bedingt durch Elektrolyse Wasser verlorengeht. Diese Nachteile werden bei Akkumulatoren vermieden, wenn diese in der Hauptladephase vollgeladen werden und die Elektrolytdurchmischung aktiv durch Einführung eines Luftstromes in die Zellen vorgenommen wird. Es sind demnach Akkumulatoren bekannt, die eine gattungsgemäße Vorrichtung zur Einführung eines Luftstromes in die Zellen eines Akkumulators aufweisen, wobei diese Vorrichtung aus einem oder mehreren Schläuchen besteht, die in einer oder mehreren Zellen des Akkumulators angeordnet sind. Die Schläuche weisen an ihren aus der Zelle herausragenden Enden jeweils ein Anschlußstück auf, mit dem die Schläuche an eine Pumpe anschließbar sind, welche beispielweise im Batterieladegerät integriert ist. Eine gute Durchmischung des Elektrolyten wird dabei dadurch erzielt, daß der Schlauch bzw. die Schläuche eine Düsenöffnung im Anschlußstück aufweisen, so daß der Druck der in die Zellen eingeblasenen Luft ausreichend hoch ist.

Aus dem Stand der Technik sind gattungsgemäße Vorrichtungen bekannt, bei welchen an den Schlauch ein Anschlußstück angespritzt ist, welches eine Verbindung des Akkumulators mit der im Ladegerät integrierten Pumpe erlaubt. Die Verbindung kann beispielsweise durch eine Kupplung erfolgen. Nachteil dieser vorbekannten Vorrichtung ist es, daß Akkumulatoren mit unterschiedlichen Anschlußstücken nur an entsprechend unterschiedliche Pumpen von Ladegeräten angeschlossen werden können. Ferner ist es bei diesen vorbekannten Vorrichtungen aufwendig, einen damit ausgerüsteten Akkumulator umzurüsten oder einen für die Installation einer gattungsgemäßen Vorrichtung vorgesehenen Akkumulator mit einer entsprechenden Vorrichtung auszurüsten.

Ausgehend von diesem Stand der Technik liegt der Erfindung die Aufgabe zugrunde, eine gattungsgemäße Vorrichtung derart zu verbessern, daß bei gleichzeitiger Verbesserung der Elektrolytdurchmischung eine einfache Verbindung der Zellen eines Akkumulators untereinander und ein einfacher Anschluß des Akkumulators an eine Pumpe eines Ladegerätes möglich ist, wobei Akkumulatoren in einfacher Weise für das Aufladen unter gleichzeitigem Einleiten eines Luftstromes nachrüstbar bzw. bestehende Vorrichtungen in einfacher Weise umrüstbar sind.

Die erfindungsgemäße Lösung dieser Aufgabenstellung sieht vor, daß das Anschlußstück auf das aus der Zelle herausragende Ende des Schlauches aufgesteckt ist und daß das Anschlußstück eine Aufnahmeöffnung für einen Adapter aufweist, der den Akkumulator mit der Pumpe verbindet.

Bei dieser erfindungsgemäßen Ausbildung einer gattungsgemäßen Vorrichtung besteht der Vorteil, daß das auf das aus der Zelle herausragende Ende des Schlauches aufgesteckte Anschlußstück in einfacher Weise auswechselbar und somit an die jeweiligen Randbedingungen von Akkumulator und Ladegerät bzw. Pumpe anpaßbar ist. Ferner kann die Vorrichtung durch die Verwendung bestimmter Adapter an bestimmte Betriebsbedingungen angepaßt werden. Hierbei ist es beispielsweise in einfacher Weise möglich, eine einfache Verbindung der Zellen eines Akkumulators untereinander und einen einfachen Anschluß des Akkumulators an eine Pumpe eines Ladegerätes durch die Verwendung im konstruktiven Aufbau einfacher Adapter herzustellen. Der einfache Aufbau der erfindungsgemäßen Vorrichtung erlaubt ferner eine kostengünstige Möglichkeit der Nachrüstung von Akkumulatoren, die für eine Aufladung unter gleichzeitiger Durchmischung des Elektrolytens vorgesehen sind.

Bei einer vorteilhaften Weiterentwicklung der erfindungsgemäßen Vorrichtung ist vorgesehen, daß das Anschlußstück einen Stutzen aufweist, in dem die Düsenöffnung angeordnet ist und auf dem der Schlauch aufgesteckt ist. Diese Weiterbildung hat den Vorteil, daß das Aufstecken des Schlauches auf das Anschlußstück einen einfachen, festen und dichten Sitz des Schlauches auf dem Anschlußstück gewährleistet. Darüber hinaus besteht der Vorteil, daß die Durchmischung des Elektrolyten durch die Anordnung der Düsenöffnung im Anschlußstück in vorteilhafter Weise verbessert wird.

Eine weitere Verbesserung der Verbindung zwischen dem Schlauch und dem Anschlußstück wird dadurch erzielt, daß der Stutzen von einem hohlzylindrischen Ansatz umgeben ist, dessen Innendurchmesser dem Außendurchmesser des Schlauches entspricht. Zur Abdichtung des Anschlußstückes in der Zelle ist als weiteres vorteilhaftes Merkmal vorgesehen, daß das Anschlußstück einen Dichtring aufweist, der in einer Ausnehmung der Mantelfläche des Anschlußstückes eingesetzt ist.

Weist die Aufnahmeöffnung im Anschlußstück mehrere Vorsprünge auf, wie es eine weitere vorteilhafte Weiterentwicklung der erfindungsgemäßen Vorrichtung vorsieht, wobei der Durchmesser der Aufnahmeöffnung zur Düsenöffnung hin verringert wird, so wird damit in einfacher Weise die Durchströmgeschwindigkeit und damit der Druck im Anschlußstück erhöht.

Ein definierter Sitz des Anschlußstückes in der Zelle wird in einfacher Weise dadurch erzielt, daß das Anschlußstück an seinem dem Schlauch abgewandten Ende einen Kragen hat, der eine Anschlagbegrenzung für den Einsatz des Anschlußstückes in der Zelle bildet.

Mehrere in Längsrichtung hintereinander angeordnete Zellen werden in einfacher Weise dadurch miteinander verbunden, daß der Adapter T-förmig ausgebildet ist und eine Einlaßöffnung sowie zwei Auslaßöffnungen hat. Durch die Einlaßöffnung strömt die von der Pumpe geförderte Luft in den Adapter ein und wird hier auf die zwei Auslaßöffnungen verteilt. Die erste Auslaßöffnung ist dabei in der Aufnahmeöffnung des Anschlußstückes angeordnet, wogegen die zweite Auslaßöffnung über einen Schlauch oder ein anderes Fördermittel mit einer Einlaßöffnung eines weiteren Adapters verbunden ist. Es ergibt sich hierdurch somit eine Reihenschaltung mehrerer erfindungsgemäßer Vorrichtungen.

Bei einer zweiten Ausführungsform weist der Adapter eine Einlaßöffnung und zwei Auslaßöffnungen auf, die jeweils im rechten Winkel zueinander angeordnet sind. Mit einem derart ausgebildeten Adapter ist es in einfacher Weise möglich, mehrere Zellen miteinander zu verbinden, wenn der Einbauraum für die erfindungsgemäßen Vorrichtungen beschränkt ist.

Um eine gute Abdichtung zwischen dem Adapter und dem Anschlußstück zu erzielen, ist in vorteilhafter Weise vorgesehen, daß zumindest die in das Anschlußstück einsteckbare Auslaßöffnung des Adapters eine Dichtung hat, welche in einer Ausnehmung in der Mantelfläche des Adapters angeordnet ist. In diesem Fall hat sich ein sogenannter O-Ring als besonders vorteilhaft erwiesen.

Besteht der Schlauch aus einem elastischen Material, ist eine einfache Handhabung der Vorrichtung beim Einbau in die Zelle gewährleistet. Eine weitere Verbesserung der Montagemöglichkeiten der erfindungsgemäßen Vorrichtung wird dadurch erzielt, daß der Schlauch in einem rohrförmigen Element geführt ist, welches fest in der Zelle angeordnet ist. Bei dieser Ausgestaltung der erfindungsgemäßen Vorrichtung wird eine einfache und lagegenaue Montage des Schlauches auch bei einer Nachrüstung oder bei einer Instandsetzung entsprechender Akkumulatoren sichergestellt.

Eine weitere Vereinfachung der Montage der erfindungsgemäßen Vorrichtung in einer Zelle eines Akkumulators wird dadurch erzielt, daß das rohrförmige Element an seinem dem Anschlußstück zugewandten Ende einen Trichter aufweist.

Schließlich wird bei einer Weiterentwicklung der erfindungsgemäßen Vorrichtung vorgeschlagen, daß die Länge des Schlauches der Länge des rohrförmigen Elementes entspricht, so daß die zur Durchmischung des Elektrolyten notwendige Luft an einer definierten Stelle in die Zelle des Akkumulators einströmt.

Weitere Merkmale und Vorteile der erfindungsgemäßen Vorrichtung ergeben sich aus der nachfolgenden Beschreibung der zugehörigen Zeichnungen, in denen die erfindungsgemäße Vorrichtung zur Einführung eines Luftstromes in eine Akkumulatorzelle dargestellt ist. In den Zeichnungen zeigt:
- Fig. 1: eine geschnittene Seitenansicht einer Zelle eines Akkumulators mit einer Vorrichtung zur Einführung eines Luftstroms und
- Fig. 2: eine teilweise geschnitten dargestellte Seitenansicht einer weiteren Ausführung der erfindungsgemäßen Vorrichtung.

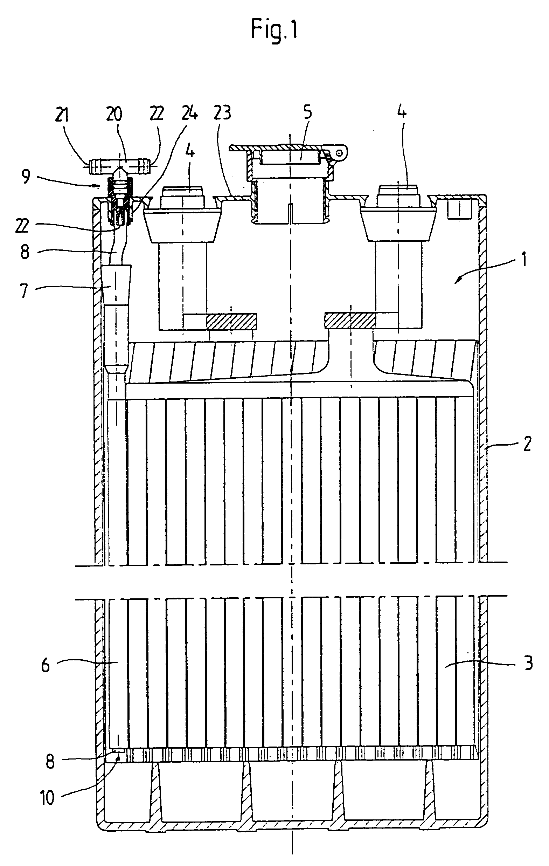

Eine in Fig. 1 dargestellte Zelle 1 ist in einem Akkumulatorengehäuse 2 angeordnet. Die Zelle 1 besteht aus zwei ineinander verschachtelten Platten, von denen in der Fig. 1 nur eine Platte 3 sichtbar ist. Jede Platte 3 weist einen Anschluß 4 auf.

Die Platten 3 der Zelle 1 sind innerhalb des Akkumulatorgehäuses 2 von einem Elektrolyten umgeben, der aus Wasser und Schwefelsäure besteht. Zum Nachfüllen von Wasser weist das Akkumulatorgehäuse 2 einen Füllstutzen 5 auf, der an der Oberseite des Akkumulatorgehäuses 2 angeordnet ist.

In dem Akkumulatorgehäuse 2 ist ferner eine Vorrichtung zur Einführung eines Luftstromes in die Zelle 1 des Akkumulators angeordnet. Diese Vorrichtung weist ein rohrförmiges Element 6 auf, welches fest in der Zelle 1 angeordnet ist. Das rohrförmige Element 6 hat an seinem oberen Ende einen Trichter 7. Dieser Trichter 7 dient der Montageerleichterung eines in dem rohrförmigen Element 6 angeordneten Schlauches 8, welcher aus einem elastischen Material besteht.

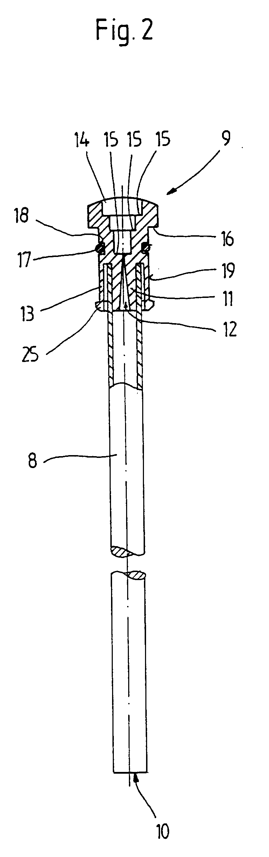

Der Schlauch 8 weist an seinem dem Trichter 7 zugewandten Ende ein Anschlußstück 9 und an seinem dem Innenraum der Zelle 1 zugewandten Ende eine Austrittsöffnung 10 auf. Der detaillierte Aufbau des Anschlußstückes 9 mit dem daran angeordneten Schlauch 8 ist aus der Fig. 2 erkennbar, in der eine geringfügig geänderte Ausführungsform des Anschlußstücks 9 dargestellt ist.

Das im wesentlichen zylindrisch ausgebildete Anschlußstück 9 hat einen Stutzen 11, in dem eine Düsenöffnung 12 ausgebildet ist. Auf den Stutzen 11 ist der Schlauch 8 aufgesteckt. Der Stutzen 11 ist von einem hohlzylindrischen Ansatz 13 des Anschlußstückes 9 umgeben. Der Innendurchmesser des hohlzylindrischen Ansatzes 13 entspricht ungefähr dem Außendurchmesser des Schlauches 8, so daß der Schlauch 8 durch den Stutzen 11 und den hohlzylindrischen Ansatz 13 fest mit dem Anschlußstück 9 verbunden ist. Durch den hohlzylindrischen Ansatz 13 und den Stutzen 11 wird darüber hinaus eine luftdichte Verbindung zwischen dem Schlauch 8 und dem Anschlußstück 9 erzielt.

Das Anschlußstück 9 hat an seinem dem Schlauch abgewandten Ende eine Aufnahmeöffnung 14, die mehrere Vorsprünge 15 aufweist, welche den Durchmesser der Aufnahmeöffnung 14 zur Düsenöffnung 13 hin verringern.

Die Vorrichtung zur Einführung des Luftstromes in die Zelle 1, welche aus dem Anschlußstück 9 und dem Schlauch 8 besteht, ist in der in Fig. 1 dargestellten Zelle 1 derart angeordnet, daß das Anschlußstück 9 über den Zellendeckel 23 des Akkumulatorgehäuses 2 hochsteht und in einem in die Zelle 1 führenden Innenstutzen 24 dicht gehalten ist. Zur Fixierung dient ein den Innenstutzen 24 hintergreifender unterer Ringansatz 25 des hohlzylindrischen Ansatzes 13 des Anschlußstücks 9 in Verbindung mit einem oberen Kragen 16. Ein lagegenaues Einsetzen des Anschlußstücks 9 mit dem daran angeordneten Schlauch 8 wird durch den Kragen 16 in Verbindung mit dem Ringansatz 25 erzielt. Der am Anschlußstück 9 befestigte Schlauch 8 ist dabei in den Trichter 7 des rohrförmigen Elements 6 eingeführt und ragt unten geringfügig aus dem rohrförmigen Element 6 heraus, um eine günstige Verteilung der eingeblasenen Luft zu gewährleisten. Die Abdichtung zwischen dem Innenstutzen 24 und dem Anschlußstück 9 erfolgt durch einen Dichtring 17, der in einer Ausnehmung 18 der Mantelfläche 19 des Anschlußstückes 9 eingesetzt ist.

Zur Durchmischung des Elektrolyten in der entladenen Zelle 1 wird der Akkumulator an ein nicht dargestelltes Ladegerät angeschlossen, in welches eine Pumpe integriert ist. Die Pumpe wird mittels eines Schlauches an der Aufnahmeöffnung 14 des Anschlußstückes 9 angeschlossen. Zur Verbindung des Schlauches mit dem Anschlußstück ist ein Adapter 20 vorgesehen.

Der Adapter 20 ist T-förmig ausgebildet und weist eine Einlaßöffnung 21 und zwei Auslaßöffnungen 22 auf. Über die Einlaßöffnung 21 wird Luft von der Pumpe in den Adapter 20 gepumpt. Diese Luft wird über die erste Auslaßöffnung 22 in den Schlauch 8 gefördert, von wo aus sie über die Austrittsöffnung 10 in die Zelle 1 einströmt und den Elektrolyten in der Zelle 1 durchmischt. Über die zweite Auslaßöffung 22 des Adapters 20 gelangt die Luft mittels eines in der Fig. 1 nicht dargestellten weiteren Schlauches in die benachbarte Zelle 1 des Akkumulators, von wo aus sie wiederum in die Zelle 1 zur Durchmischung des Elektrolyten einströmt.

Der Adapter 20 kann neben der in Fig. 1 dargestellten Ausführungsform auch derart ausgebildet sein, daß die Einlaßöffnung 21 und die zwei Auslaßöffnungen 22 jeweils im rechten Winkel zueinander angeordnet sind. Ein derartiger Adapter 20 ist dann von Vorteil, wenn die konstruktive Ausgestaltung des Akkumulatorgehäuses die Verwendung eines Adapters 20 mit in einer Linie gegenüberliegender Einlaßöffnung 21 und Auslaßöffnung 22 nicht möglich ist. Insbesondere können derartige Adapter mit im rechten Winkel zueinander angeordneten Einlaß- bzw. Auslaßöffnungen bei beengten Einbauverhältnissen verwendet werden.

Die voranstehend beschriebene Vorrichtung zur Einführung eines Luftstromes in die Zellen 1 eines Akkumulators hat im wesentlichen den Vorteil, daß der Anschluß der Pumpe an das Anschlußstück 9 der Zelle 1 sehr einfach durch die Verwendung des Adapters 20 erfolgt. Darüber hinaus ist die voranstehend beschriebene Vorrichtung an entsprechende Akkumulatoren, insbesondere bei einer Nachrüstung, anpaßbar. Hierzu ist es beispielsweise möglich, verschiedene Anschlußstücke 9 mit entsprechenden Adaptern 20 sowie Schläuchen 8 in bereits bestehende und in den Akkumulatoren vorgesehenen rohrförmigen Elementen 6 einzusetzen. Somit können die Akkumulatoren in einfacher Weise auf entsprechende Ladegeräte umgerüstet werden. Schließlich ist es durch die Verwendung der Adapter 20 auch möglich, mehrere Zellen eines Akkumulators in einfacher Weise untereinander zu verbinden, so daß eine gleichmäßige Durchmischung der einzelnen Zellen aufgrund des gleichen Luftdruckes in den Zellen 1 erfolgt.

### Bezugszeichenliste

- 1: Zelle
- 2: Akkumulatorgehäuse
- 3: Platte
- 4: Endpol
- 5: Füllstutzen
- 6: rohrförmiges Element
- 7: Trichter
- 8: Schlauch
- 9: Anschlußstück
- 10: Austrittsöffnung
- 11: Stutzen
- 12: Düsenöffnung
- 13: Ansatz
- 14: Aufnahmeöffnung
- 15: Vorsprung
- 16: Kragen
- 17: Dichtring
- 18: Ausnehmung
- 19: Mantelfläche
- 20: Adapter
- 21: Einlaßöffnung
- 22: Auslaßöffnung
- 23: Zellendeckel
- 24: Innenstutzen
- 25: Ringansatz

## Patentansprüche

1. Vorrichtung zur Einführung eines Luftstromes in eine Zelle eines Akkumulators mit einem an eine Pumpe anschließbaren Schlauch, welcher an seinem aus der Zelle herausragenden Ende ein Anschlußstück mit einer Düsenöffnung und an seinem im Innenraum der Zelle angeordneten Ende eine Austrittsöffnung aufweist,
**dadurch gekennzeichnet**,
daß das Anschlußstück (9) auf das aus der Zelle (1) herausragende Ende des Schlauches (8) aufgesteckt ist und eine Aufnahmeöffnung (14) für einen Adapter (20) aufweist, der den Akkumulator mit der Pumpe verbindet.

2. Vorrichtung nach Anspruch 1, dadurch gekennzeichnet, daß das Anschlußstück (9) einen Stutzen (11) aufweist, in dem die Düsenöffnung (12) angeordnet ist und auf den der Schlauch (8) aufgesteckt ist.

3. Vorrichtung nach Anspruch 2, dadurch gekennzeichnet, daß der Stutzen (11) von einem hohlzylindrischen Ansatz (13) umgeben ist, dessen Innendurchmesser annähernd dem Außendurchmesser des Schlauches (8) entspricht.

4. Vorrichtung nach einem der Ansprüche 1 bis 3, dadurch gekennzeichnet, daß das Anschlußstück (9) einen Dichtring (17) aufweist, der in einer Ausnehmung (18) der Mantelfläche (19) des Anschlußstückes (9) gehalten ist.

5. Vorrichtung nach einem der Ansprüche 1 bis 4, dadurch gekennzeichnet, daß die Aufnahmeöffnung (14) mehrere Vorsprünge (15) aufweist, welche den Durchmesser der Aufnahmeöffnung (14) zur Düsenöffnung (12) hin verringern.

6. Vorrichtung nach einem der Ansprüche 1 bis 5, dadurch gekennzeichnet, daß das Anschlußstück (9) an seinem dem Schlauch (8) abgewandten Ende einen Kragen (16) hat.

7. Vorrichtung nach einem der Ansprüche 1 bis 6, dadurch gekennzeichnet, daß der Adapter (20) T-förmig ausgebildet ist und eine Einlaßöffnung (21) sowie zwei Auslaßöffnungen (22) hat.

8. Vorichtung nach einem der Ansprüche 1 bis 7, dadurch gekennzeichnet, daß der Adapter (20) eine Einlaßöffnung (21) und zwei Auslaßöffnungen (22) aufweist, die jeweils im rechten Winkel zueinander angeordnet sind.

9. Vorrichtung nach einem der Ansprüche 1 bis 8, dadurch gekennzeichnet, daß zumindest die in das Anschlußstück (9) einsteckbare Auslaßöffnung (22) des Adapters (20) eine Dichtung hat, welche in einer Ausnehmung in der Mantelfläche des Adapters (20) angeordnet ist.

10. Vorrichtung nach einem der Ansprüche 1 bis 9, dadurch gekennzeichnet, daß der Schlauch (8) aus einem elastischen Material besteht.

11. Vorrichtung nach einem der Ansprüche 1 bis 10, dadurch gekennzeichnet, daß der Schlauch (8) in einem rohrförmigen Element (6) geführt ist, welches fest in der Zelle (1) angeordnet ist.

12. Vorrichtung nach Anspruch 11, dadurch gekennzeichnet, daß das rohrförmige Element (6) an seinem dem Anschlußstück (9) zugewandten Ende einen Trichter (7) aufweist.

13. Vorrichtung nach Anspruch 11, dadurch gekennzeichnet, daß die Länge des Schlauches (8) im wesentlichen der Länge des rohrförmigen Elementes (6) entspricht.
